(19) Europäisches Patentamt
European Patent Office
Office européen des brevets

(11) **EP 1 050 849 B1**

(12) **EUROPEAN PATENT SPECIFICATION**

(45) Date of publication and mention
of the grant of the patent:
**27.12.2017 Bulletin 2017/52**

(51) Int Cl.:
***H04N 5/14*** *(2006.01)* ***G06T 7/262*** *(2017.01)*

(21) Application number: **00401099.7**

(22) Date of filing: **19.04.2000**

(54) **Process for estimating a dominant motion between two frames**

Verfahren zur Bestimmung einer dominanten Bewegung zwischen zwei Bildern

Procédé d'estimation d'un mouvement dominant entre deux trames

(84) Designated Contracting States:
**DE ES FR GB IT**

(30) Priority: **03.05.1999 EP 99401077**

(43) Date of publication of application:
**08.11.2000 Bulletin 2000/45**

(73) Proprietor: **Thomson Licensing**
**92130 Issy-les-Moulineaux (FR)**

(72) Inventors:
• **Edouard, Francois**
**92648 Boulogne Cédex (FR)**
• **Thoreau, Dominique**
**92648 Boulogne Cédex (FR)**
• **Chevance, Christophe**
**92648 Boulogne Cédex (FR)**
• **Viellard, Thierry**
**92648 Boulogne Cédex (FR)**

(74) Representative: **Huchet, Anne et al**
**TECHNICOLOR**
**1-5, rue Jeanne d'Arc**
**92130 Issy-les-Moulineaux (FR)**

(56) References cited:
• **ALEXANDER M E ET AL: "The registration of MR images using multiscale robust methods" MAGNETIC RESONANCE IMAGING, 1996, ELSEVIER, USA, vol. 14, no. 5, pages 453-468, XP002119343 ISSN: 0730-725X**
• **ZIEGLER M: "HIERARCHICAL MOTION ESTIMATION USING THE PHASE CORRELATION METHOD IN 140 MBIT/S HDTV-CODING" SIGNAL PROCESSING OF HDTV, 2, TURIN, AUG. 30 - SEPT. 1, 1989, no. WORKSHOP 3, 30 August 1989 (1989-08-30), pages 131-137, XP000215234 CHIARIGLIONE L**

EP 1 050 849 B1

**Description**

The present invention relates to a process for estimating a dominant motion between two successive frames of a video sequence. This process is valid for all kind of scene or camera motion configuration.

The estimation of the dominant motion is an important step for estimating or segmenting the apparent motion between two successive frames. In a dense motion field estimation, it strongly accelerates the process by providing an initial motion near the true apparent motion over a large part of the frame. This is especially the case when the dominant motion is not constant, that is not a pure translational apparent motion, but more complicated such as a zoom or a rotation around the optical axis of the camera. In a motion segmentation process, it represents a basic step for identifying the motion of a region, since it may be applied to the entire frame as well as regions of the frame.

The main commonly used approach for estimating the dominant motion between two successive frames is based on a robust regression method. It will be called in the following *'robust regression global motion estimation'*. The main characteristics of this algorithm are the following :

-    it uses a global motion model for representing the dominant motion with very few parameters. In most of cases, an affine motion model, which is a good compromise between the physical reality of the apparent motion and the computational complexity, is chosen. It may represent with a good approximation apparent motions resulting from camera motions such as traveling, pan, tilt, zoom, and any combination of these motions.
-    the estimation of the parameters of this model is performed using a robust regression algorithm which theoretically allows the elimination of outliers, i.e. pixels having a different motion from the dominant motion, from the estimation process reference is made to the paper by Malciu M; Preteux F: "A robust model-based approach for 3D head tracking in video sequences", Proceedings of the Fourth International Conference on Automatic Face and Gesture Recognition, 28-30 March 2000, Proceedings Fourth IEEE International Conference on Automatic Face and Gesture Recognition; and to the paper by Odobez J M; Bouthemy P: "Robust multiresolution estimation of parametric motion models", Journal of Visual Communication and Image Representation,Dec. 1995 Academic Press, USA.
-    this process may work without a prior dense motion field estimation. Data used for the global motion estimation process are the source frames. The process is based on the estimated spatio-temporal gradients of the luminance function at each pixel, through the well-known 'optic flow constraint'.
-    this process may be achieved in a multi-resolution scheme, in order to deal with large motion amplitudes.

Alternative methods are using phase correlation, as e.g. the paper by Pla F; Bober M: "Estimating translation/deformation motion through phase correlation", Proceedings of ICIAP 97. 9th International Conference on Image Analysis and Processing, 17-19 Sept. 1997, Florence, Italy, Image Analysis and Processing, 9th International Conference.

In many cases this type of algorithms provides satisfactory results, and is able to identify the dominant motion.

However the process strongly depends on the initial value of the global motion. In general this global motion is set initially to zero.

Moreover, there are many configurations where the estimation process fails and provides a wrong global motion. If the source frames are poorly textured and contain large uniform areas, the process generally converges toward a small amplitude motion, even if the real dominant motion is large. This phenomena is especially true when a large foreground object, tracked by the camera, moves over a background scene.

This problem can be easily explained : as said before, the 'motion' observations are based on the spatio-temporal gradients ; these observations are obviously very few informative on uniform or poorly textured areas. If such areas are majority in the frame, the algorithm cannot converge to a right motion value and it considers that a small motion well fits to the motion observations.

It is an object of the present invention to solve the main limitations identified above.

The invention relates to a process for estimating the dominant motion between two frames. It combines a phase correlation peak detection algorithm and a multi-resolution robust regression algorithm for improving the robustness of the estimation.

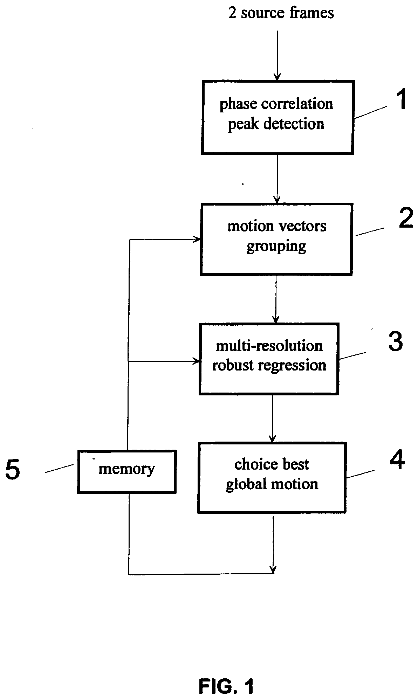

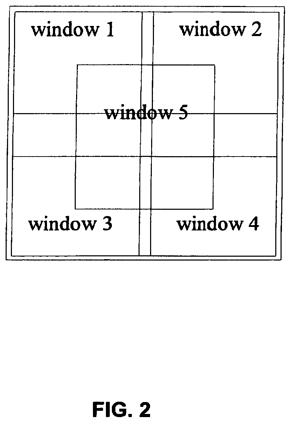

The invention will in the following be explained using examples to explicit some of its features and figure 1 and figure 2 wherein ;

  Fig. 1 is a flow chart of the dominant motion estimation algorithm
  Fig. 2 is a view showing a disposition of different windows for the estimation of the translational motions

The invention implements a generic global motion estimation process which works in most scene and camera configurations. This algorithm combines two global motion estimation methods, the phase correlation peak detection and the multi-resolution robust regression.

The phase correlation peak detection algorithm is a fast and efficient tool for estimating a global translational motion over a window between two frames. In the method described hereafter, it is used for providing potential initializations to the multi-resolution robust regression algorithm. For each initialization, this algorithm computes a global motion estimation. A final step consists of choosing the best estimation.

Figure 1 is a flow chart representing the generic global motion estimation process implemented by the invention.

Considering a time instant $t$ and two source frames $I_t$ and $I_{t-1}$, the different steps of the process (identified with numbers 1 to 5 in figure 1) are :

Step 1 : estimation of translational motions over several different windows within the frame, using the correlation peak detection algorithm ; Figure 2 shows emplacement of windows, in an example where five windows are used. A mobile window could also be used depending for instance on pixels areas where the global motion fits.

Step 2 : translational motions are grouped if they are similar. P translational motion vectors are defined from the N translational motion vectors estimated during step 1 (P≤N).

Step 3 : estimation of global motions over the frame implementing the multiresolution robust regression algorithm, using the different available initializations : the motion coming from each remaining translational motion vector, plus the previous final global motion estimated at the previous time (from frame $I_{t-2}$ to frame $I_{t-1}$); at the very first estimation, this global motion is set to zero.

Step 4 : choice of the best estimated global motion.

This final dominant motion vector is memorised at step 5 as the previous dominant motion vector in order to be used, at step 2 and step 3, for the next source frames to be processed.

A detailed description of the global motion estimation process is given hereafter:

The affine modelization of the 2D apparent motion in a video sequence is one of the best compromises between the computation complexity (only 6 parameters have to be identified) and the physical reality (that is the correct representation of the 2D apparent motion).

Hence the motion model used here is the following. A 2D motion vector of a point $(x,y)$ in the frame is modeled using six motion parameters $\theta = (a,b,\alpha,\beta,\gamma,\delta)^T$ in the following way:

$$\vec{\omega}_\theta(x, y) = \begin{pmatrix} dx \\ dy \end{pmatrix} = \begin{pmatrix} dx = a + \alpha.x + \gamma.y \\ dy = b + \beta.x + \delta.y \end{pmatrix} \qquad \textbf{Equation 1}$$

A phase correlation peak detection algorithm is implemented at first step 1. The computation of phase correlation consists of the following successive phases:

- getting two pixel windows f1 and f2 which have the same sizes (n.m).

- the two-dimensional Fast Fourier Transform (FFT) is applied on the luminance components of each window resulting in two complex (n, m) element arrays F1 and F2.

- the phase difference matrix is derived by forming the cross power spectrum F1.F2 and dividing by its modulus.

- a weighting function of n.m dimension can be applied to the phase difference, in order to improve the phase correlation result. The goal of this procedure is to reduce the influence of noise which can disturb the correlation surface.

- Inverse Fourier Transform of the phase difference matrix gives the correlation surface with peaks for candidate displacements.

Finally the search dominant vector operation consists of looking for the maximum peaks in the correlation surface which identifies the most dominant displacement.

A second step 2 performs a translational motion vectors grouping.

For each estimated translational motion vector $\vec{\omega}$ provided by the correlation peak detection algorithm applied to different windows within the frame, a first test is achieved:

- if the previous estimated dominant motion $\theta$ (previous frames) is translational, that is if $\alpha = \beta = \gamma = \delta = 0$ and:
- if the euclidian distance between this dominant motion and $\vec{\omega}$ is lower than a given threshold,

then $\vec{\omega}$ is suppressed of the list of translation vectors.

In the same way, the remaining translational vectors are compared together using the euclidian distance. Redundant vectors are suppressed using the same test, with the same threshold.

(The Euclidian distance between two vectors with components x1,y1 and x2, y2 is $\sqrt{(x1-x2)^2 + (y1-y2)^2}$ ).

Next step 3 performs a multi-resolution robust regression algorithm.

In order to avoid the costly dense motion field estimation, which moreover can fail when large motions are present or in presence of strongly non-translational motions, the global motion estimation process is based on the spatio-temporal gradients of the frame luminance, which are linked to the 2D apparent motion by the well-known 'optic flow constraint equation' :

$$dx.\Delta I_x + dy.\Delta I_y + \Delta I_t = 0 \qquad \text{Equation 2}$$

where $dx$ and $dy$ are the two components of the motion vector, $\Delta I_x$, $\Delta I_y$ and $\Delta I_t$ are the spatio-temporal gradients of the luminance, that is, an estimation of the derivates of the luminance.

When $dx$ and $dy$ are replaced by their value depending on the global motion model, given in equation 1, this leads to the following equation :

$$(a - \alpha.x - \gamma.y).\Delta I_x + (b - \beta.x - \delta.y).\Delta I_y + \Delta I_t = 0 \qquad \text{Equation 3}$$

For estimating the global motion vector $\theta = (a,b,\alpha,\beta,\gamma,\delta)^T$ over the whole frame, a classical regression algorithm would intend to minimize over the 6 parameters of $\theta$ the following function :

$$\sum_{x,y} \left( (a - \alpha.x - \gamma.y).\Delta I_x(x,y) + (b - \beta.x - \delta.y).\Delta I_y(x,y) + \Delta I_t(x,y) \right)^2$$

However, in case where several global motions are present in the frame, the process will be disrupted and would provide a wrong estimation. That is the reason why a robust regression algorithm is used. It theoretically allows to eliminate outliers, that is, pixels that do not have the same motion as the dominant one. This algorithm consists of minimizing the following function :

$$\sum_{x,y} wc(x,y) \left( (a - \alpha.x - \gamma.y).\Delta I_x(x,y) + (b - \beta.x - \delta.y).\Delta I_y(x,y) + \Delta I_t(x,y) \right)^2$$

where $wc(x,y)$ is a weighting function which intends to favour pixels for which the current global motion estimation well fits.

Several functions may be chosen for $wc$ (Lorentzian, Geman-Mc Lure, ...). The important point is that, in any case, this function depends on a scaling factor, related to the variance of the noise that corrupts the observations, and that must be correctly estimated for a good behaviour of the algorithm.

The estimation process is iterative. At each iteration k, the previous estimation $\hat{\theta}_{k-1}$ is used as initialization of the estimation process. In the same way, the scaling factor $\hat{\sigma}^2_k$ is iteratively estimated.

Initially, $\hat{\sigma}^2_0$ is set to 5x$R_0$, where $R_0$ is a given value. In all our experiments, $R_0$ was egal to 50. Then at each iteration, $\hat{\sigma}^2_k$ is computed as follows :

Let $\hat{V}^2_k$ be the mean weighted motion compensation error of the estimation over the frame:

$$\hat{V}_k^2 = \frac{\sum wc(x,y).\Delta I_t(x,y)^2}{\sum wc(x,y)} \qquad \text{Equation 4}$$

.

The scaling factor is computed as :

$$\hat{\sigma}_k^2 = \min( \ 0.66 \ \hat{V}_k^2 \ , \ \max(R_0 \ , \ 0.8 \ \hat{\sigma}_{k-1}^2)) \qquad \text{Equation 5}$$

In order to be able to estimate large motions, the process is applied in a multiresolution way : a multiresolution pyramid of the two frames is firstly built; then the estimation process is applied from the coarsest to the finest resolution, by using as initial estimate of the motion parameters at a given level the estimation from the coarser level.

The initial global motion parameters vector is set to :

- the null vector if the process is just starting for the video shot,

- the previous value (that is the vector calculated from the previous resolution), rescaled by taking into account the higher resolution level, if the process is just starting for the current frame.

Then an iterative process is applied.

*Let k* be the current iteration number. From the current estimation of the motion parameters vector $\hat{\theta}_{k-1}$, a motion compensation of the previous frame is achieved, and the spatio-temporal gradients maps are computed. The continuation of this process consists of progressively correcting the first estimate of $\theta$ until this correction becomes low. The robust regression at each iteration provides a correcting motion parameters vector $d\hat{\theta}_k$.

The global motion parameters vector is then up-dated :

$$\hat{\theta}_k = \hat{\theta}_{k-1} + d\hat{\theta}_k$$

The process is iterated until the amplitude of the estimated global motion parameters correction becomes lower than a given threshold. The resulting motion parameters vector $\hat{\theta}$ is considered as the robust estimation of the dominant motion parameters vector.

Next step 4 allows to choose the best global motion vector.

During the robust regression process, the final variance over the dominant motion support, that is, parts of the frame where the dominant motion fits, is computed as follows.

First, inlier pixels (where the dominant motion fits) are determined by the following test:

if $\Delta I_t(x,y)^2 < 4 \ \hat{\sigma}_P^2$ then the pixel is an inlier

where P is the final iteration number of the estimation process.

Then the final variance is computed as the mean of $\Delta I_t(x,y)^2$ over the inliers set.

The best global motion vector is chosen as the vector that provides the minimum final variance.

## Claims

1. A method for estimating the affine global motion between two video frames comprising the steps of
   solving the optical flow constraint equation by using a global affine motion model;
   minimizing iteratively the re-weighted least-square function associated with the optical flow constraint equation, **characterized by** with the weights favouring pixels for which the previous global motion estimation fits well,
   said minimization step being initialized several times by the vectors of a set of grouped translational motion vectors representing a set of potential affine global motions thereby obtaining a set of affine global motion estimates,
   said grouped translational motion vectors are computed by grouping similar translational motion vectors with each vector being computed by phase correlation based block-matching (1)
   selecting from said set of affine global motion estimates the one which minimizes the mean of the square of the temporal gradient term of the optical flow constraint equation after the current frame has been motion compensated by the global motion estimate under consideration;
with the mean being taken over those pixels for which the global motion estimation fits well in the sense that the square of the temporal gradient term of the optical flow constraint equation is below some threshold.

2. Process according to claim 1, **characterized in that** the minimization procedure is also initialized according to the affine global motion calculated between two previous frames

3. Process according to claim 1, **characterized in that** the weights depend on a scaling factor computed at each iteration and related to the variance of the noise

4. Process according to claim 1, **characterized in that** the estimation is a multiresolution motion estimation.

5. Process according to claim 1, **characterized in that** a motion vector grouping (2) is performed according to their Euclidean distance.

**Patentansprüche**

1. Verfahren zum Schätzen der affinen globalen Bewegung zwischen zwei Videoeinzelbildern, wobei das Verfahren die folgenden Schritte umfasst:

Lösen der Lichtfluss-Beschränkungsgleichung unter Verwendung eines Modells der globalen affinen Bewegung; iteratives Minimieren der neu gewichteten Funktion der kleinsten Quadrate, die der Lichtfluss-Beschränkungsgleichung zugeordnet ist,
**dadurch gekennzeichnet, dass**
mit den Gewichtungen, die Pixel, für die der vorhergehende Schätzwert der globalen Bewegung gut passt, bevorzugen,
der Minimierungsschritt durch die Vektoren einer Menge gruppierter Translationsbewegungsvektoren, die eine Menge potentieller affiner globaler Bewegungen repräsentieren, mehrmals initialisiert wird, um dadurch eine Menge von Schätzwerten der affinen globalen Bewegung zu erhalten,
die gruppierten Translationsbewegungsvektoren durch Gruppieren ähnlicher Translationsbewegungsvektoren berechnet werden, wobei jeder Vektor durch Blockanpassung (1) auf der Grundlage der Phasenkorrelation berechnet wird,
Auswählen desjenigen aus der Menge von Schätzwerten der affinen globalen Bewegung, der den Mittelwert des Quadrats des zeitlichen Gradiententerms der Lichtfluss-Beschränkungsgleichung minimiert, nachdem das gegenwärtige Einzelbild durch den betrachteten Schätzwert der globalen Bewegung bewegungskompensiert worden ist;
wobei der Mittelwert über jene Pixel gebildet wird, für die der Schätzwert der globalen Bewegung in dem Sinn gut passt, dass das Quadrat des zeitlichen Gradiententerms der Lichtfluss-Beschränkungsgleichung unter einem Schwellenwert liegt.

2. Verfahren nach Anspruch 1, **dadurch gekennzeichnet, dass** die Minimierungsprozedur ebenfalls in Übereinstimmung mit der zwischen zwei vorhergehenden Einzelbildern berechneten affinen globalen Bewegung initialisiert wird.

3. Verfahren nach Anspruch 1, **dadurch gekennzeichnet, dass** die Gewichtungen von einem Skalierungsfaktor abhängen, der in jeder Iteration berechnet wird und der mit der Varianz des Rauschens zusammenhängt.

4. Verfahren nach Anspruch 1, **dadurch gekennzeichnet, dass** der Schätzwert ein Mehrfachauflösungs-Bewegungsschätzwert ist.

5. Verfahren nach Anspruch 1, **dadurch gekennzeichnet, dass** eine Bewegungsvektorgruppierung (2) in Übereinstimmung mit ihrem euklidischen Abstand ausgeführt wird.

**Revendications**

1. Procédé d'estimation du mouvement global affine entre deux trames vidéo comprenant les étapes suivantes :

résolution de l'équation de contrainte du flux optique à l'aide d'un modèle de mouvement affine global ;
minimisation itérative de la fonction des moindres carrés repondérés associée à l'équation de contrainte du flux optique, **caractérisée en ce que** les poids favorisent les pixels pour lesquels l'estimation de mouvement global précédente est bien adaptée,
ladite étape de minimisation étant initialisée plusieurs fois par les vecteurs d'un ensemble de vecteurs de mouvement translationnel groupés représentant un ensemble de mouvements globaux affines potentiels, obtenant ainsi un ensemble d'estimations de mouvements globaux affines,
lesdits vecteurs de mouvement translationnel groupés étant calculés par le regroupement de vecteurs de mouvement translationnel similaires, chaque vecteur étant calculé par la mise en correspondance de blocs basée sur la corrélation de phase (1),
sélection dans ledit ensemble d'estimations de mouvements globaux affines de celui qui minimise la moyenne du carré du terme du gradient temporel de l'équation de contrainte du flux optique une fois que la trame actuelle a été compensée en mouvement par l'estimation de mouvement global étudiée ;
la moyenne étant prise sur les pixels pour lesquels l'estimation de mouvement global est bien adaptée dans le sens où le carré du terme du gradient temporel de l'équation de contrainte du flux optique est inférieur à un seuil.

2. Procédé selon la revendication 1, **caractérisé en ce que** la procédure de minimisation est également initialisée en fonction du mouvement global affine calculé entre deux trames précédentes.

3. Procédé selon la revendication 1, **caractérisé en ce que** les poids dépendent d'un facteur d'échelle calculé à chaque itération et lié à la variance du bruit.

4. Procédé selon la revendication 1, **caractérisé en ce que** l'estimation est une estimation de mouvement multirésolution.

5. Procédé selon la revendication 1, **caractérisé en ce qu'**un regroupement de vecteurs de mouvement (2) est effectué en fonction de leur distance euclidienne.

2 source frames

FIG. 1

| window 1 | window 2 |
|----------|----------|
| window 5 | |
| window 3 | window 4 |

**FIG. 2**

**EP 1 050 849 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MALCIU M ; PRETEUX F.** A robust model-based approach for 3D head tracking in video sequences. *Proceedings of the Fourth International Conference on Automatic Face and Gesture Recognition, 28-30 March 2000, Proceedings Fourth IEEE International Conference on Automatic Face and Gesture Recognition*
- Robust multiresolution estimation of parametric motion models. **ODOBEZ J M ; BOUTHEMY P.** Journal of Visual Communication and Image Representation. Academic Press, December 1995
- **PLA F ; BOBER M.** Estimating translation/deformation motion through phase correlation. *Proceedings of ICIAP 97. 9th International Conference on Image Analysis and Processing, 17-19 Sept. 1997, Florence, Italy, Image Analysis and Processing, 9th International Conference*